# EUROPEAN PATENT SPECIFICATION

(11) **EP 2 390 170 B1**
(45) Date of publication and mention of the grant of the patent: **25.05.2016**
(21) Application number: 11166641.8
(22) Date of filing: 19.05.2011
(51) Int. Cl.: B62J 17/02, B62K 19/30, B62J 6/02, B62J 99/00, B60Q 1/04, B62K 11/04, B62K 19/40

(54) **Motorcycle**
Motorrad
Motocyclette

(30) Priority: 24.05.2010 JP 2010118301
(43) Date of publication of application: 30.11.2011
(73) Proprietor: Yamaha Hatsudoki Kabushiki Kaisha (Yamaha Motor Co., Ltd.), Shizuoka 438-8501 (JP)
(72) Inventor: Hirai, Fumiyasu, Iwata-shi Shizuoka 4388501 (JP); Takahashi, Keisuke, Iwata-shi Shizuoka 4388501 (JP)
(74) Representative: Grünecker Patent- und Rechtsanwälte PartG mbB

(56) References cited:
- JP-A- 2003 011 719
- JP-A- 2004 276 862
- JP-A- 2007 186 128
- US-A1- 2009 127 884
- US-A1- 2010 025 140

## Description

The present invention relates to a motorcycle according to the preamble of claim 1. Such a motorcycle is shown in JP 2004-276862 A.

Motorcycles are provided with a bracket for attaching a license plate. The bracket is a metal member separate from the front cowl. For example, the motorcycle disclosed in Japanese Unexamined Patent Application Publication No. 2007-186128 is provided with a front cowl and a bracket. A headlight is attached to the front cowl. A number plate is attached to the bracket. The bracket is a portion separate from the front cowl, and is fixed to the front cowl together with the headlight by a bolt member.

During assembly of a motorcycle provided with a bracket such as described above, the bracket is attached to the front cowl, and the license plate is subsequently fixed to the bracket by a bolt or other fixing member. The number of man-hours for assembling the motorcycle therefore increases, and assembly becomes complex. An object of the present invention is to provide a motorcycle which requires a reduced number of man-hours for assembly.

Such an object is achieved by a motorcycle according to claim 1.

A motorcycle according to a first aspect of the present invention comprises a headlight unit, a front cowl, and an attachment portion. The headlight unit includes a base member made of resin, and a lens member attached to the base member. The front cowl is a resin member to which the headlight unit is attached. The attachment portion is a portion made of resin and used to attach a license plate. The attachment portion protrudes from the front cowl; and is integrally molded with the front cowl.

A motorcycle according to a second aspect of the present invention is the motorcycle according to the first aspect, wherein the front cowl includes a plate portion positioned below the headlight unit. The attachment portion is integrated with an upper surface of the plate portion.

A motorcycle according to a third aspect of the present invention is the motorcycle according to the second aspect, wherein the attachment portion extends forward from a front end portion of the upper surface of the plate portion.

A motorcycle according to a fourth aspect of the present invention is the motorcycle according to the second aspect, wherein the attachment portion is disposed further forward than a lower end portion of the headlight unit.

A motorcycle according to a fifth aspect of the present invention is the motorcycle according to the first aspect, wherein the front cowl includes a plate portion positioned below the headlight unit. The attachment portion extends forward from the plate portion.

A motorcycle according to a sixth aspect of the present invention is the motorcycle according to the fifth aspect, further comprising a cover member for covering the front cowl from below. The cover member supports the attachment portion and the plate portion from below.

A motorcycle according to a seventh aspect of the present invention is the motorcycle according to the sixth aspect, wherein the cover member is divided into left and right portions below the plate portion. The cover member includes a first member and a second member formed separately from each other.

A motorcycle according to an eighth aspect of the present invention is the motorcycle according to the seventh aspect, wherein the first member and the second member are fixed to a lower surface of the plate portion.

A motorcycle according to a ninth aspect of the present invention is the motorcycle according to the first aspect, wherein the front cowl includes a plate portion positioned below the headlight unit. The attachment portion is integrated with a lower surface of the plate portion.

A motorcycle according to a tenth aspect of the present invention is the motorcycle according to the ninth aspect, wherein the attachment portion extends downward from the lower surface of the plate portion.

A motorcycle according to an eleventh aspect of the present invention is the motorcycle according to the tenth aspect, wherein the attachment portion is integrated with a rear end portion of the lower surface of the plate portion.

A motorcycle according to a twelfth aspect of the present invention is the motorcycle according to the first aspect, wherein the front cowl includes a support portion. The attachment portion includes a protruding portion and a fixing portion. The protruding portion protrudes from the support portion. The fixing portion is integrated with the protruding portion, and is a portion to which the license plate is fixed.

A motorcycle according to a thirteenth aspect of the present invention is the motorcycle according to the twelfth aspect, wherein a rib is provided to the protruding portion.

A motorcycle according to a fourteenth aspect of the present invention is the motorcycle according to the twelfth aspect, wherein a rib is provided to the support portion.

A motorcycle according to a fifteenth aspect of the present invention is the motorcycle according to the twelfth aspect, wherein the protruding portion passes between the headlight unit and the front cowl in the vertical direction, and extends in the front-rear direction. The protruding portion has a plate shape. The protruding portion has a bent shape which is convex upward or downward in the width direction.

A motorcycle according to a sixteenth aspect of the present invention is the motorcycle according to the fifteenth aspect, wherein a connecting portion of the fixing portion and the protruding portion is inclined with respect to the extension direction of the protruding portion as viewed from a side.

A motorcycle according to a seventeenth aspect of the present invention is the motorcycle according to the twelfth aspect, wherein the support portion has a bent shape which is convex upward or downward in the width direction.

A motorcycle according to an eighteenth aspect of the present invention is the motorcycle according to the first aspect, wherein the attachment portion extends from a position further rearward than a front end of the lens member.

A motorcycle according to a nineteenth aspect of the present invention is the motorcycle according to the first aspect, wherein the attachment portion includes at least three contacting surfaces which make contact with at least three dies during molding.

In the motorcycle according to the first aspect of the present invention, there is no need for an operation for fixing the separate bracket, used for license plate attachment, to the front cowl. The number of man-hours for assembling the motorcycle can thereby be reduced.

In the motorcycle according to the second aspect of the present invention, a structure can be adopted in which the front cowl and the attachment portion are integrally molded, and the license plate is disposed below the headlight unit.

In the motorcycle according to the third aspect of the present invention, the attachment portion extends forward from the plate portion. The lower surface of the headlight unit and the upper surface of the plate portion can therefore be disposed close together.

In the motorcycle according to the fourth aspect of the present invention, the attachment portion extends forward from the front end portion of the upper surface of the plate portion. The attachment portion therefore does not form an obstruction even in a case in which the headlight unit is inserted from behind the front cowl, and ease of assembly is increased.

In the motorcycle according to the fifth aspect of the present invention, the attachment portion is disposed further forward than the lower end portion of the headlight unit; therefore, the attachment portion does not form an obstruction when the headlight unit is inserted in the front cowl. The space between the lower surface of the headlight unit and the upper surface of the plate portion can therefore be reduced in size.

In the motorcycle according to the sixth aspect of the present invention, the plate portion with which the attachment portion is integrated is supported by the cover member. The strength of the periphery of the attachment portion can therefore be increased. The reduction in strength of the periphery of the attachment portion caused by molding the attachment portion using a resin can therefore be compensated for while keeping the attachment portion from increasing in size.

In the motorcycle according to the seventh aspect of the present invention, since the cover member is divided into left and right portions, resin molding of the cover member is facilitated. Since the attachment member is also integrated with the plate portion separate from the cover member, there is no need for a structure in which the attachment portion is divided. The structure of the front cowl and the attachment portion can therefore be simplified.

In the motorcycle according to the eighth aspect of the present invention, since the first member and second member of the cover member are fixed to the lower surface of the plate portion, the attachment portion can be more securely supported.

In the motorcycle according to the ninth aspect of the present invention, since the attachment portion is integrated with the lower surface of the plate portion, the lower surface of the headlight unit and the upper surface of the plate portion can be disposed close together.

In the motorcycle according to the tenth aspect of the present invention, a structure can be adopted in which the front cowl and the attachment portion are integrally molded, and the license plate is disposed below the front cowl.

In the motorcycle according to the eleventh aspect of the present invention, since the attachment portion is integrated with the rear end portion of the lower surface of the plate portion, the connecting portion of the attachment portion and the plate portion is not readily exposed to the outside. The degree of freedom of the structure of the periphery of the attachment portion can therefore be improved without reducing design properties.

In the motorcycle according to the twelfth aspect of the present invention, the protruding portion protrudes from the support portion, and the license plate is fixed to the fixing portion integrated with the protruding portion. The degree of freedom of the placement of the license plate can therefore be increased.

In the motorcycle according to the thirteenth aspect of the present invention, since a rib is provided to the protruding portion, the rigidity of the attachment portion can be increased.

In the motorcycle according to the fourteenth aspect of the present invention, since a rib is provided to the support portion, the rigidity of the support portion can be improved.

In the motorcycle according to the fifteenth aspect of the present invention, the rigidity of the protruding portion can be improved while keeping the vertical dimensions of the protruding portion from increasing. The protruding portion can therefore be disposed in the space between the headlight unit and the front cowl, the space being restricted from widening in the vertical direction.

In the motorcycle according to the sixteenth aspect of the present invention, the surface area of the connecting portion of the fixing portion and the protruding portion can be enlarged. The strength of the connecting portion of the fixing portion and the protruding portion can therefore be improved.

In the motorcycle according to the seventeenth aspect of the present invention, the rigidity of the support portion for supporting the license plate and the attachment portion can be improved.

In the motorcycle according to the eighteenth aspect of the present invention, since the attachment portion extends from a position further rearward than the front end of the lens member, the connecting portion of the base member, the lens member, or the front cowl and the attachment portion can be made less visible from the outside.

In the motorcycle according to the nineteenth aspect of the present invention, the attachment portion is formed by using at least three dies. The degree of freedom of the shape of the attachment portion can thereby be increased.
FIG. 1 is a side view showing a motorcycle according to an embodiment of the present invention;
FIG. 2 is an enlarged side view showing a headlight unit, a front cowl member, and a cowl cover member;
FIG. 3 is an enlarged front view showing the headlight unit, the front cowl member, and the cowl cover member;
FIG. 4 is a side view showing the headlight unit;
FIG. 5 is a side view showing the front cowl member;
FIG. 6 is a perspective view showing the front cowl member;
FIG. 7 is a bottom view showing the front cowl member;
FIG. 8 is a perspective view showing the cowl cover member;
FIG. 9 is a sectional side view showing the headlight unit, the front cowl member, and the cowl cover member;
FIG. 10 is a side view showing the front cowl member according to another embodiment;
FIG. 11 is a side view showing the front cowl member according to another embodiment;
FIG. 12 is a side view showing the headlight unit according to another embodiment, which does not form part of the present invention.
FIG. 13 is a side view showing the headlight unit according to another embodiment, which does not form part of the present invention; and
FIG. 14 is a view showing the method for molding the front cowl member.

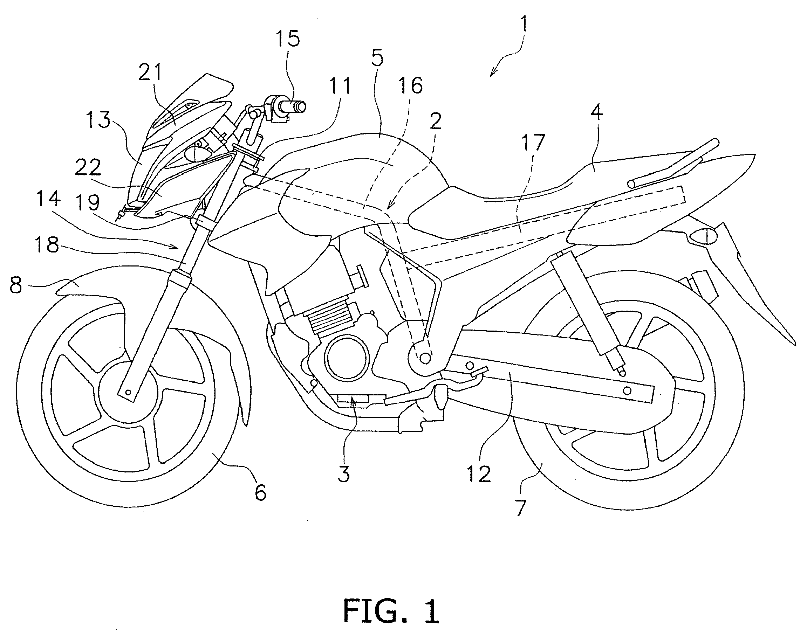

The motorcycle 1 according to an embodiment of the present invention is shown in FIG. 1. FIG. 1 is a side view showing the motorcycle 1. In the description given hereinafter, "left" and "right" are the left and right from the perspective of a rider who is riding the motorcycle 1. "Front" and "rear" are the front and rear from the perspective of a rider who is riding the motorcycle 1. The "width direction" is the left-right direction from the perspective of a rider who is riding the motorcycle 1. The motorcycle 1 is provided with a vehicle body frame 2, an engine 3, a seat 4, a fuel tank 5, a front wheel 6, and a rear wheel 7.

The vehicle body frame 2 includes a head pipe 11, a front frame 16, and a rear frame 17. A front fork 14 is supported by the head pipe 11. A handlebar 15 is fixed to an upper portion of the front fork 14. A headlight unit 13 and a front cowl member 21 are disposed in front of the head pipe 11. A cowl cover member 22 is disposed in front of the head pipe 11. The front cowl member 21 corresponds to the front cowl of the present invention. The structure of these members will be described in detail hereinafter. The front fork 14 includes a pair of left and right shock absorbers 18 and a bracket 19. The pair of shock absorbers 18 are disposed at an interval apart from each other in the width direction. In FIG. 1, only the left shock absorber 18 of the left and right shock absorbers 18 is shown. The front wheel 6 is rotatably supported at the lower portion of the front fork 14; i.e., at the lower portion of the shock absorbers 18. A front fender 8 is disposed above the front wheel 6. The bracket 19 supports the upper portion of the shock absorbers 18.

The front frame 16 is composed of a pipe-shaped member which is bent at a plurality of locations. A swing arm 12 is linked to the rear end of the front frame 16 so as to be able to swing vertically. The rear wheel 7 is rotatably supported at the rear end of the swing arm 12. The rear frame 17 is composed of a pair of left and right pipe-shaped members. In FIG. 1, only the pipe-shaped member positioned on the left side among the left and right pipe-shaped members is shown. The rear frame 17 is connected to the front frame 16, and extends rearward from the front frame 16.

The seat 4 and the fuel tank 5 are attached to the upper portion of the vehicle body frame 2. The fuel tank 5 is disposed in front of the seat 4. The fuel tank 5 is disposed above the front frame 16. The seat 4 is disposed above the rear frame 17.

The engine 3 transmits drive power to the rear wheel 7 via a chain not shown in the drawing. The engine 3 is disposed below the fuel tank 5 and is supported by the front frame 16.

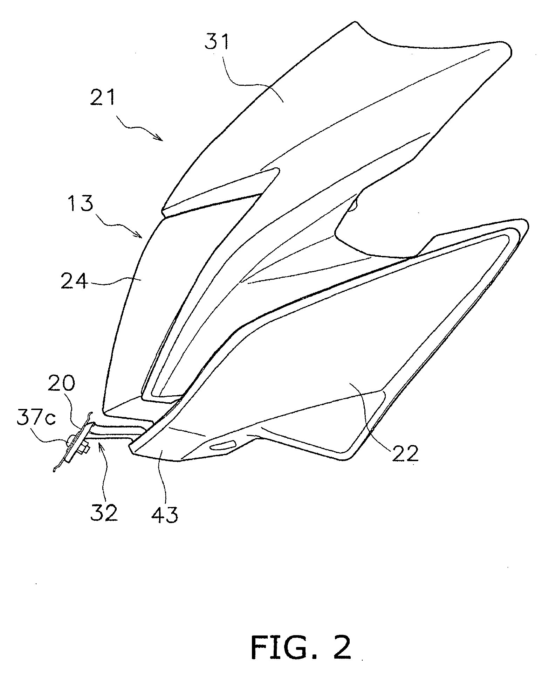

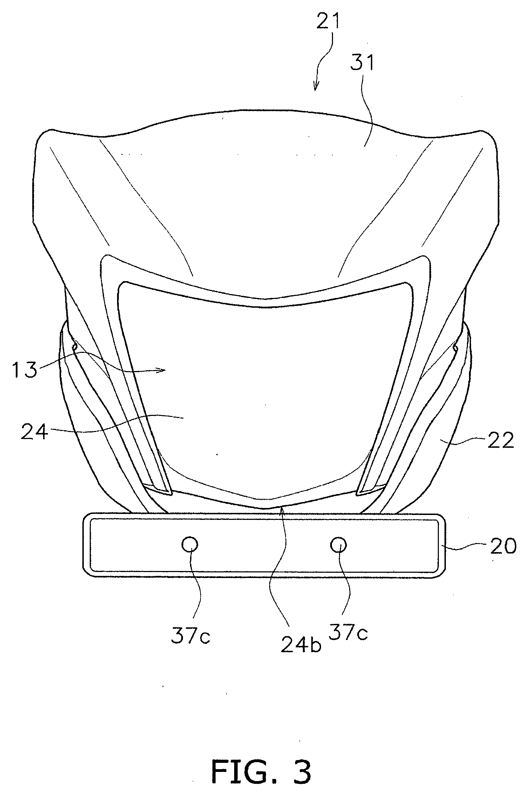

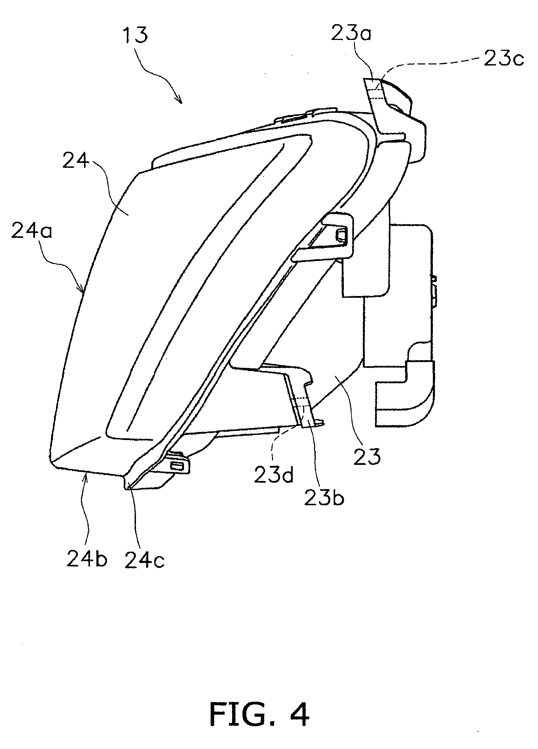

FIG. 2 is an enlarged side view showing the headlight unit 13, the front cowl member 21, and the cowl cover member 22. FIG. 3 is an enlarged front view showing the headlight unit 13, the front cowl member 21, and the cowl cover member 22. The headlight unit 13 is attached to the front cowl member 21. As shown in FIG. 4, the headlight unit 13 includes a base member 23 and a lens member 24. FIG. 4 is a side view showing the headlight unit 13. The base member 23 is formed, for example, from an opaque resin. A headlight bulb not shown in the drawing is attached to the base member 23. A plurality of fixing flanges 23a, 23b are also provided to the base member 23. Through-holes 23c, 23d through which screws described hereinafter for fixing are passed are provided to the fixing flanges 23a, 23b. The lens member 24 is formed of a transparent resin. The lens member 24 is a member that is separate from the base member 23, and is attached to the base member 23. A front surface 24a of the lens member 24 has a curved surface shape which is gently curved vertically and in the width direction. A bottom surface 24b of the lens member 24 has a shape which is substantially flat in the front-rear direction. The bottom surface 24b of the lens member 24 has a shape which is gently curved so as to be convex downward in the width direction. A protruding portion 24c which protrudes downward is provided to the rear end portion of the bottom surface 24b of the lens member 24.

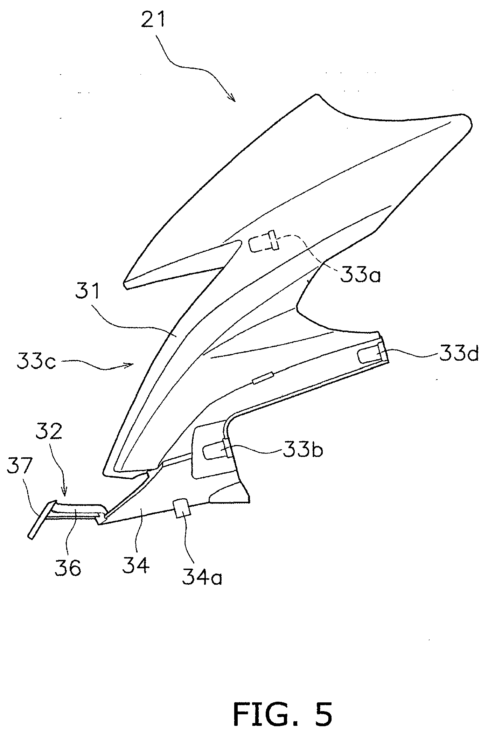

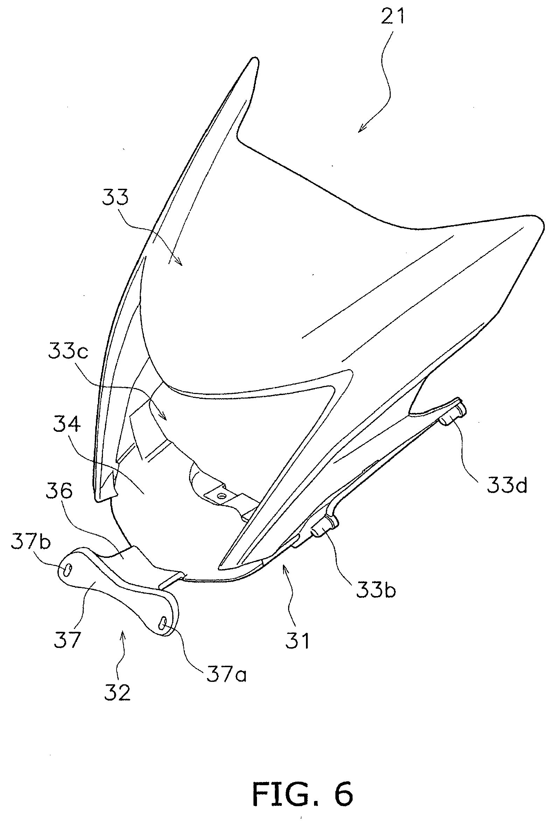

As shown in FIG. 5, the front cowl member 21 includes a cowl portion 31 and an attachment portion 32. The front cowl member 21 is a member composed of a single component, and the cowl portion 31 and the attachment portion 32 are integrally formed. The front cowl member 21 is formed, for example, from an opaque resin. The headlight unit 13 is attached to the cowl portion 31. As shown in FIG. 6, the cowl portion 31 includes a cowl main body 33 and a plate portion 34. FIG. 5 is a side view showing the front cowl member 21. FIG. 6 is a perspective view showing the front cowl member 21.

The cowl main body 33 covers the headlight unit 13 from both sides and above. The upper surface of the cowl main body 33 covers the headlight unit 13 from above. Side surfaces of the cowl main body 33 cover the headlight unit 13 from the sides thereof. A plurality of boss portions 33a, 33b, 33d are provided to a back surface and side surfaces of the cowl main body 33. Screw holes are provided to the boss portions 33a, 33b, 33d. Screws for fixing are passed through the through-holes 23c, 23d of the base member 23 and the screw holes of the boss portions 33a, 33b, whereby the headlight unit 13 is fixed to the front cowl member 21. An opening 33c is provided in the front surface of the cowl main body 33. The lens member 24 of the headlight unit 13 described above is disposed inside the opening 33c (see FIG. 2).

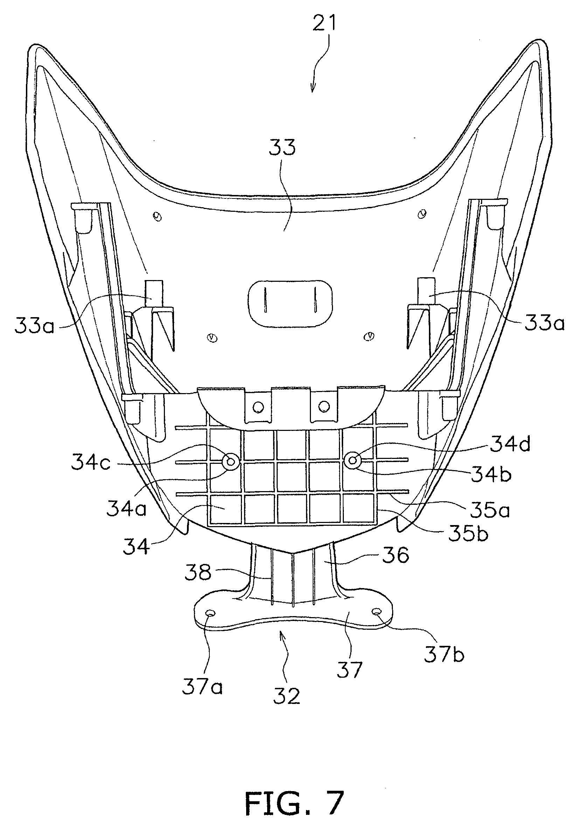

The plate portion 34 is connected to the lower end portion of both side surfaces of the cowl main body 33. The plate portion 34 has a shape of a plate that extends substantially in the horizontal direction. The plate portion 34 is positioned below the headlight unit 13. The upper surface of the plate portion 34 has a shape which is bent so as to be convex downward in the width direction. The upper surface of the plate portion 34 has a shape which is bent to form a curved surface. A plurality of projections 34a, 34b (see FIG. 7) protruding downward are provided to the lower surface of the plate portion 34. As shown in FIG. 7, screw holes 34c, 34d are provided in bottom surfaces of the projections 34a, 34b. A plurality of ribs 35a, 35b are also provided to the lower surface of the plate portion 34. The plurality of ribs 35a, 35b are provided so as to protrude downward from the lower surface of the plate portion 34. The plurality of ribs 35a extend in the width direction. The plurality of ribs 35b extend in the front-rear direction. The ribs 35a and the ribs 35b are provided so as to be crossed to each other. FIG. 7 is a bottom view showing the front cowl member 21. In FIG. 7, reference symbols are shown for only some of the plurality of ribs 35a, 35b, and not for the other ribs.

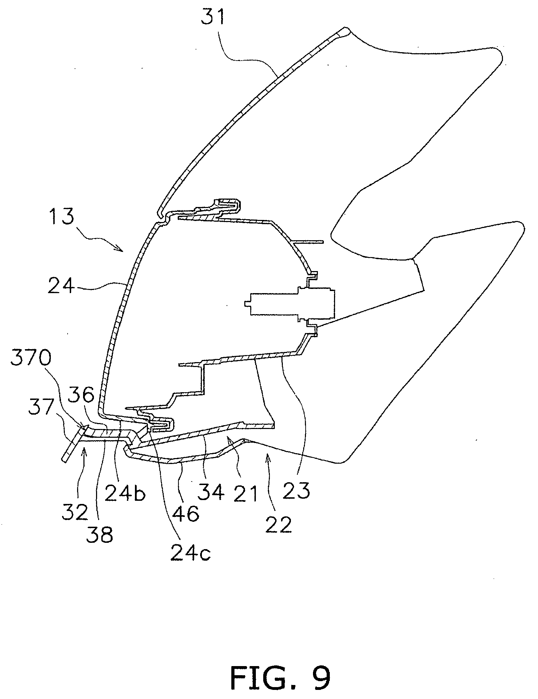

The attachment portion 32 is a portion to which a license plate 20 (see FIG. 2) is attached. The attachment portion 32 is formed of resin. The attachment portion 32 is integrally formed with a connected member. Specifically, the attachment portion 32 is integrally molded with the cowl portion 31. The attachment portion 32 is formed of the same resin as the integrally molded member. In other words, in the present embodiment, the attachment portion 32 is formed of the same resin as the cowl portion 31. The attachment portion 32 protrudes forward from the plate portion 34 and extends forward from the plate portion 34. The attachment portion 32 extends forward from a position further rearward than the front end of the lens member 24. As shown in FIG. 6, the attachment portion 32 is integrated with the upper surface of the plate portion 34, and is connected to the front end portion of the upper surface of the plate portion 34. The attachment portion 32 extends forward from the front end portion of the upper surface of the plate portion 34. As shown in FIG. 9, the attachment portion 32 includes a portion which protrudes upward from the upper surface of the plate portion 34. More specifically, the attachment portion 32 includes a portion which protrudes upward at a position further forward than the lower end portion of the headlight unit 13 in the upper surface of the plate portion 34. In other words, the attachment portion 32 includes a portion which protrudes upward at a position further forward than the front end portion of the protruding portion 24c of the headlight unit 13 in the upper surface of the plate portion 34. More specifically, the attachment portion 32 includes a portion which protrudes forward and upward at an angle from the upper surface of the plate portion 34. A rear end of the attachment portion 32 is positioned further forward than the lower end portion of the headlight unit 13. As shown in FIG. 2, the attachment portion 32 passes through below the lens member 24 of the headlight unit 13 and extends to a position further forward than the lens member 24. The attachment portion 32 includes a protruding portion 36 and a fixing portion 37. The protruding portion 36 protrudes forward from the cowl portion 31. The protruding portion 36 passes between the headlight unit 13 and the front cowl member 21 in the vertical direction and extends in the front-rear direction. The protruding portion 36 is connected to the plate portion 34, and protrudes forward past the front end portion of the plate portion 34. In other words, the protruding portion 36 protrudes from the plate portion 34 as a support portion. The protruding portion 36 has a plate shape. The protruding portion 36 has a shape which is bent downward in the width direction. The protruding portion 36 is bent in a curved surface shape. The fixing portion 37 is a portion to which the license plate 20 is directly fixed or indirectly fixed using an interposed washer or the like. The fixing portion 37 is connected to the distal end of the protruding portion 36, and is integrally molded with the protruding portion 36. The fixing portion 37 has a plate shape which extends in the width direction, and is shaped so as to be longer in the width direction than the protruding portion 36. A rear surface of the fixing portion 37 is inclined with respect to the front-rear direction. The rear surface of the fixing portion 37 is inclined with respect to the vertical direction. Consequently, as viewed from the side thereof, a connecting portion 370 of the fixing portion 37 and the protruding portion 36 is inclined with respect to the direction in which the protruding portion 36 extends, i.e., with respect to the front-rear direction. As shown in FIG. 6, through-holes 37a, 37b are provided at both lateral end portions of the fixing portion 37. Bolts for fixing the license plate 20 (see the bolts 37c shown in FIGS. 2 and 3) are passed through the through-holes 37a, 37b. As shown in FIG. 7, a plurality of ribs 38 are provided to the lower surface of the protruding portion 36. The plurality of ribs 38 are disposed a distance apart from each other in the width direction. The ribs 38 extend in the front-rear direction, and front end portions of the ribs 38 are connected to a back surface of the fixing portion 37. In FIG. 7, reference symbols are shown for only some of the plurality of ribs 38, and not for the other ribs.

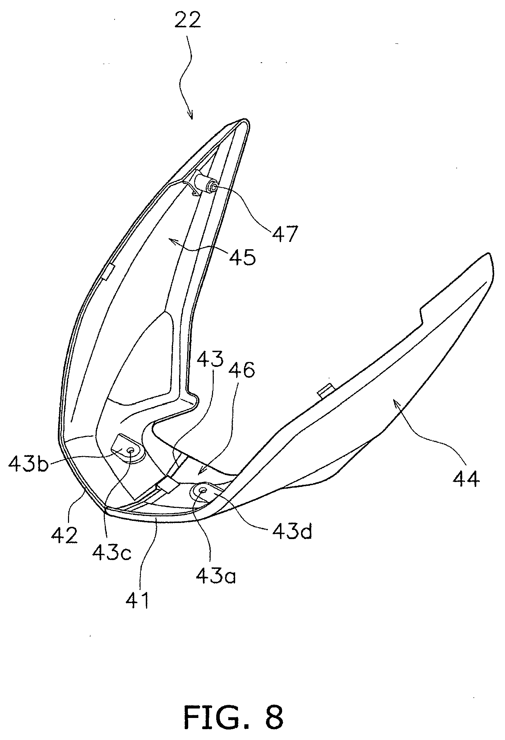

As shown in FIG. 2, the cowl cover member 22 is a member for covering the cowl portion 31 from below. The cowl cover member 22 is a component that is separate from the front cowl member 21. FIG. 8 is a perspective view showing the cowl cover member 22. As shown in FIG. 8, the cowl cover member 22 has a bent shape which is substantially U-shaped as viewed from the front. Left and right side surface portions of the cowl cover member 22 cover portions of the left and right side surfaces of the cowl main body 33 from the sides thereof. Specifically, left and right side surface portions 44, 45 of the cowl cover member 22 cover lower portions of the left and right side surfaces of the cowl main body 33 from the sides thereof. On the inside surfaces of the left and right side surface portions 44, 45 of the cowl cover member 22, boss portions 47 are provided in positions near the boss portions 33d (see FIG. 5) of the cowl main body 33 described above. The boss portions 47 of the side surface portions 44, 45 are fixed to the boss portions 33d of the cowl main body 33 via a bracket not shown in the drawing, whereby the cowl cover member 22 and the front cowl member 21 are fixed to each other. A bottom surface portion 46 of the cowl cover member 22 is disposed below the plate portion 34 described above. On the upper surface of the bottom surface portion 46 of the cowl cover member 22, boss portions 43a, 43b are provided in positions corresponding to the projections 34a, 34b (see FIG. 7) of the plate portion 34. Through-holes 43c, 43d are provided to the boss portions 43a, 43b, respectively. Screws for fixing are passed through the through-holes 43c, 43d and the screw holes 34c, 34d of the plate portion 34 described above, whereby the cowl cover member 22 and the front cowl member 21 are fixed to each other. The cowl cover member 22 includes a first member 41 and a second member 42. The first member 41 and the second member 42 are formed separately from each other. In other words, the cowl cover member 22 is divided into two components; i.e., the first member 41 and the second member 42, and a divided surface 43 thereof is positioned below the plate portion 34. The through-holes 43c, 43d described above are provided to the first member 41 and the second member 42, respectively, and each of the first member 41 and the second member 42 is fixed to the lower surface of the plate portion 34.

FIG. 9 is a sectional side view showing the headlight unit 13, the front cowl member 21, and the cowl cover member 22. As shown in FIG. 9, a gap is provided between the upper surface of the plate portion 34 and the lower surface of the headlight unit 13. The front end portion of the plate portion 34 is positioned further rearward than the front end portion of the lens member 24. The front end portion of the bottom surface portion 46 of the cowl cover member 22 is disposed near the front end portion of the plate portion 34, and makes contact with the front end portion of the plate portion 34. As described above, the projections 34a, 34b (see FIG. 5) of the plate portion 34, and the boss portions 43a, 43b (see FIG. 8) of the cowl cover member 22 are fixed by screws. Consequently, the cowl cover member 22 supports the plate portion 34 and a rear end portion of the attachment portion 32 from below. As described above, the protruding portion 36 of the attachment portion 32 protrudes from the front end portion of the plate portion 34. The protruding portion 36 passes below the bottom surface 24b of the lens member 24 and above the front end portion of the bottom surface portion 46 of the cowl cover member 22, and extends to a position further forward than the distal end portion of the lens member 24.

The motorcycle 1 according to the present embodiment has the features described below.

The attachment portion 32 is integrally molded with the cowl portion 31 and constitutes a portion of the front cowl member 21, which is a single component. There is accordingly no need for an operation for fixing, to the cowl portion 31, a bracket for attaching the license plate 20. The number of man-hours for assembling the motorcycle 1 can thereby be reduced.

The attachment portion 32 is integrated with the upper surface of the plate portion 34. The plate portion 34 is positioned below the headlight unit 13. The license plate 20 can therefore be disposed below the headlight unit 13.

Since the attachment portion 32 extends forward from the plate portion 34, the lower surface of the headlight unit 13 and the upper surface of the plate portion 34 can be disposed close together. A wide clearance can thereby be provided between the lower surface of the cowl cover member 22 and the front fender 8, and interference of the front fender 8 with the cowl cover member 22 can be prevented.

Since the attachment portion 32 extends forward from the front end portion of the plate portion 34, the attachment portion 32 does not form an obstruction even in a case in which the headlight unit 13 is inserted from behind the front cowl member 21. Assemblability of the headlight unit 13 and the front cowl member 21 is thereby improved.

Since the attachment portion 32 is disposed further forward than the lower end portion of the headlight unit 13, the attachment portion 32 does not form an obstruction when the headlight unit 13 is inserted in the front cowl member 21. The space between the lower surface of the headlight unit 13 and the upper surface of the plate portion 34 can therefore be reduced in size.

The plate portion 34 with which the attachment portion 32 is integrated is supported from below by the cowl cover member 22. The strength of the portion of the plate portion 34 near the attachment portion 32 can therefore be improved. Usually, even when the attachment portion 32 and the cowl cover member 22 are separated, the attachment portion 32 is supported from below by the cowl cover member 22 when a load is placed on the attachment portion 32. Deformation of the attachment portion 32 is thereby suppressed. The reduction in strength caused by forming the attachment portion 32 using a resin can thereby be compensated for while keeping the attachment portion 32 from increasing in size.

Since the cowl cover member 22 is divided into two components, the cowl cover member 22 can easily be molded from resin. Consequently, the shape of the cowl cover member 22 has a high degree of freedom. In a hypothetical case in which the attachment portion 32 is provided to the cowl cover member 22, since the divided surface 43 of the cowl cover member 22 is positioned at the center in the width direction, in a design in which the attachment portion 32 is provided at the center in the width direction of the cowl cover member 22, the attachment portion 32 must also include a divided structure. Alternatively, there is a need for the cowl cover member 22 to include a divided structure rather than the attachment portion 32. In this case, a problem emerges that the structure of the cowl cover member 22 and the attachment portion 32 becomes complex. In the motorcycle 1 according to the present embodiment, however, the attachment portion 32 is integrated with the plate portion 34, which is separate from the cowl cover member 22. Consequently, there is no need to divide the attachment portion 32, and the structure of the cowl cover member 22 and/or the attachment portion 32 can be simplified. Since the plate portion 34 is also covered by the cowl cover member 22, the shape of the plate portion 34 has minimal effect on the design properties of the motorcycle 1. The plate portion 34 can therefore be imparted with an easily moldable shape without reducing the design properties. As described above, since there is a high degree of freedom in the shape of the cowl cover member 22, which is visible to the outside, imparting the cowl cover member 22 with a shape having high design properties has minimal effect on the ease of manufacturing. Design properties and ease of manufacturing can thus be obtained at the same time.

The cowl cover member 22 is fixed to the lower surface of the plate portion 34. The attachment portion 32 can therefore be securely supported by the cowl cover member 22. By imparting the plate portion 34 with a bent shape, the rigidity of the plate portion 34 for supporting the license plate 20 and the attachment portion 32 can be improved.

Since the ribs 38 are provided to the protruding portion 36, the rigidity of the attachment portion 32 can be improved. Flexure of the attachment portion 32 can therefore be suppressed even when the attachment portion 32 is formed of resin. By endowing the protruding portion 36 with a bent shape, the rigidity of the protruding portion 36 for supporting the license plate 20 can be improved. The rigidity of the protruding portion 36 can also be improved while keeping the vertical dimensions thereof from increasing. The protruding portion 36 can therefore be disposed in the space between the headlight unit 13 and the cowl cover member 22, the space being restricted from widening in the vertical direction. Furthermore, since the protruding portion 36 can be disposed at a position such as described above, the license plate 20 can be disposed in a position below the headlight unit 13 and in front of the bottom portion of the cowl cover member 22.

By endowing the protruding portion 36 with a bent shape, the surface area of the connecting portion 370 of the protruding portion 36 and the fixing portion 37 can be enlarged. The strength of the connecting portion 370 of the protruding portion 36 and the fixing portion 37 can therefore be improved.

An embodiment of the present invention has been described above, but the present invention is not limited to the embodiment described above; a variety of modifications thereof being possible within a scope that does not depart from the scope defined in the appended claims. For example, the present invention is not limited to a sport-type motorcycle such as the one described above, and may be applied to a scooter or moped-type motorcycle.

The protruding portion 36 may have a bent shape in which an angle is formed, rather than a curved surface shape. The protruding portion 36 may have a bent shape which is convex upward, rather than a bent shape which is convex downward. The protruding portion 36 may have a shape which is bent in a plurality of locations. The plate portion 34 may also have a bent shape in which an angle is formed, rather than a curved surface shape. The plate portion 34 may have a bent shape which is convex upward, rather than a bent shape which is convex downward. The plate portion 34 may have a shape which is bent in a plurality of locations.

The attachment portion 32 may include a plurality of protruding portions. In this case, each of the plurality of protruding portions may have a plate shape such as that of the protruding portion 36 described above. Alternatively, each of the plurality of protruding portions may have a columnar shape.

In the embodiment described above, the rear end of the attachment portion 32 is positioned further forward than the lower end portion of the headlight unit 13. However, at least the front end of the attachment portion 32 may be positioned further forward than the lower end portion of the headlight unit 13.

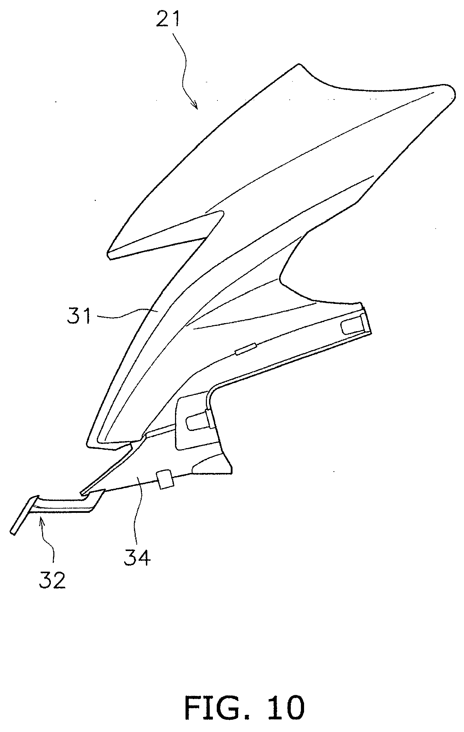

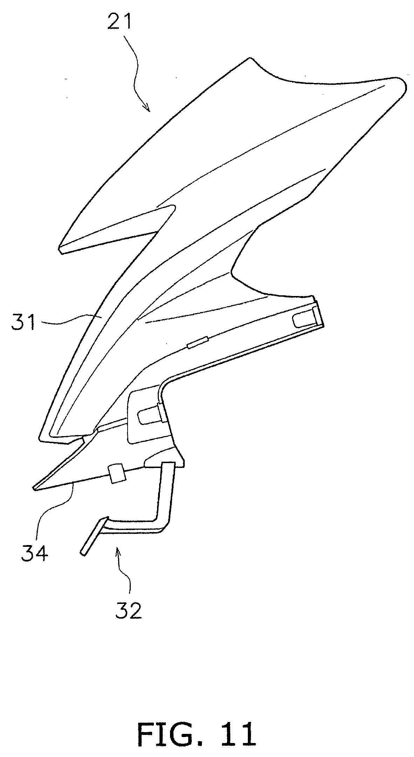

The attachment portion 32 may be integrated with the lower surface of the plate portion 34. The lower surface of the headlight unit 13 and the upper surface of the plate portion 34 may thereby be disposed close together. For example, the attachment portion 32 may extend forward from the plate portion 34, as shown in FIG. 10. Alternatively, the attachment portion 32 may extend downward from the lower surface of the plate portion 34, as shown in FIG. 11. The license plate 20 may thereby be disposed below the cowl portion 31. In this case, the attachment portion 32 preferably extends from a position further rearward than the front end of the lens member 24. The attachment portion 32 is also preferably integrated with the rear end portion of the lower surface of the plate portion 34. The connecting portion of the attachment portion 32 and the plate portion 34 can thereby be made less visible from the outside. The degree of freedom of the structure of the attachment portion 32 and the plate portion 34 can therefore be improved without reducing the design properties.

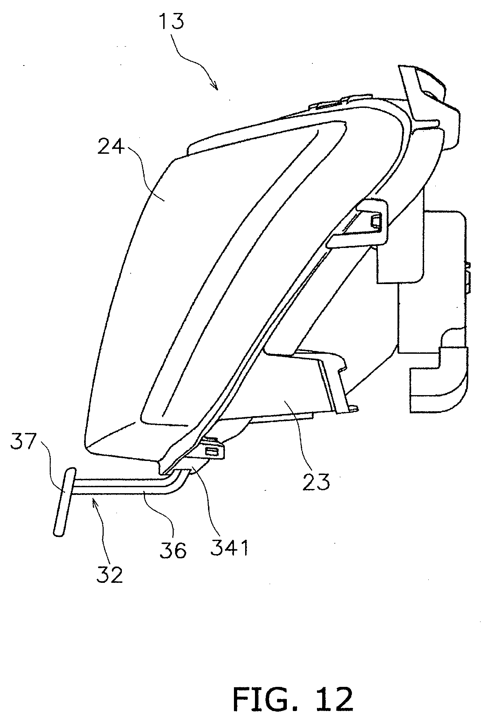

Although not within the scope of the present invention, the attachment portion 32 could be integrally molded with the base member 23 of the headlight unit 13, as shown in FIG. 12. In other words, the attachment portion 32 may be provided so as to protrude from the base member 23. The attachment portion 32 extends from a position further rearward than the front end of the lens member 24 in this case as well. In this case, a support portion 341 may be formed in the base member 23, and the protruding portion 36 may be formed so as to protrude from the support portion 341. The support portion 341 is a portion formed in the bottom portion of the base member 23, to which the attachment portion 32 is linked, for example. The support portion 341 of the base member 23 may also be reinforced by ribs in the same manner as the plate portion 34 of the embodiment described above. The support portion 341 preferably has a bent shape which is convex downward in the same manner as the plate portion 34 of the embodiment described above. Alternatively, the support portion 341 may have a bent shape which is convex upward. The attachment portion 32 preferably extends from a position further rearward than the front end of the lens member 24 in this case as well. The attachment portion 32 is preferably formed of the same type of resin as the base member 23 for the sake of manufacturing efficiency, manufacturing cost, or other factors, but may be formed of a different resin than that of the base member 23.

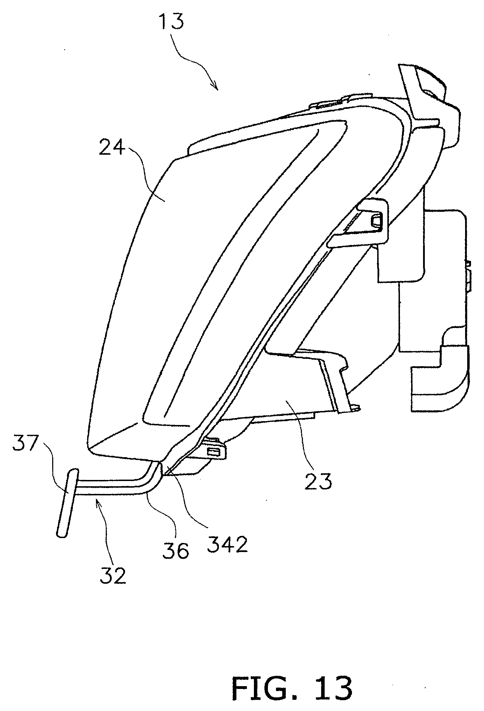

In another example not forming part of the present invention, the attachment portion 32 may be integrally molded with the lens member 24, as shown in FIG. 13. In other words, the attachment portion 32 may be provided so as to protrude from the lens member 24. The attachment portion 32 extends from a position further rearward than the front end of the lens member 24 in this case as well. In this case, a support portion 342 may be formed in the lens member 24, and the protruding portion 36 may be formed so as to protrude from the support portion 342. The support portion 342 is a portion formed in the bottom portion of the lens member 24, and is a portion to which the attachment portion 32 is linked, for example. The support portion 342 of the lens member 24 may also be reinforced by ribs in the same manner as the plate portion 34 of the embodiment described above, for example. The support portion 342 preferably has a bent shape which is convex downward in the same manner as the plate portion 34 of the embodiment described above. Alternatively, the support portion 342 may have a bent shape which is convex upward. The attachment portion 32 preferably extends from a position further rearward than the front end of the lens member 24 in this case as well. The attachment portion 32 is preferably formed of the same type of resin as the lens member 24 for the sake of manufacturing efficiency, manufacturing cost, or other factors, but may be formed of a different resin (e.g., of an opaque resin) than that of the lens member 24.

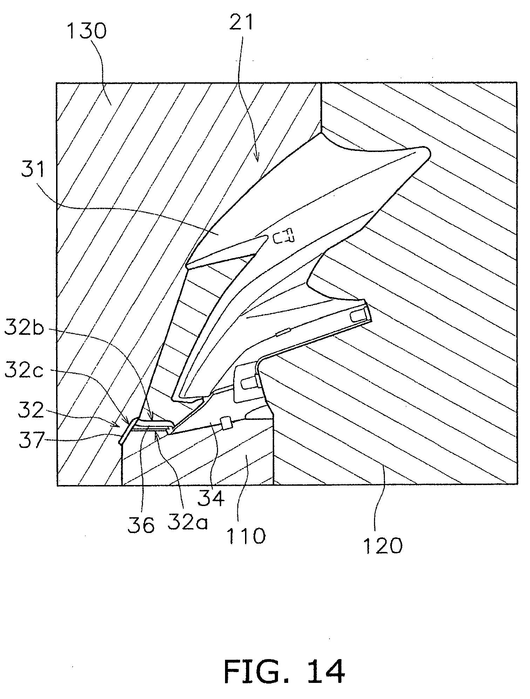

The front cowl member 21 of the embodiment described above is preferably molded using three dies 110, 120, 130, as shown in FIG. 14. In this case, the attachment portion 32 includes at least three contacting surfaces 32a, 32b, 32c which make contact with at least three dies 110, 120, 130 during molding. For example, the contacting surface 32a is included in the lower surface of the protruding portion 36. The contacting surface 32a of the protruding portion 36, and the lower surface of the plate portion 34 make contact with the die 110. The contacting surface 32b is included in the upper surface of the protruding portion 36. The contacting surface 32b of the protruding portion 36, and the inner surface of the cowl portion 31 which includes the upper surface of the plate portion 34 make contact with the die 120. The contacting surface 32c is included in the fixing portion 37. The contacting surface 32c of the fixing portion 37, and the outer surface of the cowl portion 31 make contact with the die 130. The number of divisions of the die is not limited to three; i.e., the dies 110, 120, 130 shown in FIG. 14. However, at least three dies are preferably used. The division positions of the dies are also not limited to the division positions of the dies 110, 120, 130 shown in FIG. 14. In other words, the number and positions of the divisions of the dies may be modified according to the shape of the front cowl member 21 or the position of the attachment portion 32.

## Claims

1. A motorcycle (1) comprising:
a headlight unit (13) including a base member (23) made of resin, and a lens member (24) attached to the base member (23);
a front cowl (21) made of resin, to which the headlight unit (13) is attached; and
an attachment portion (32) used to attach a license plate (20),
**characterized by**
the attachment portion (32) protruding from the front cowl (21), and
the attachment portion (32) being made of resin and being integrally molded with the front cowl (21).

2. The motorcycle (1) according to claim 1, wherein the front cowl (21) includes a plate portion (34) positioned below the headlight unit (13); and the attachment portion (32) is integrated with an upper surface of the plate portion (34).

3. The motorcycle (1) according to claim 1 or 2, wherein the attachment portion (32) is disposed further forward than a lower end portion of the headlight unit (13).

4. The motorcycle (1) according to claim 1, wherein the front cowl (21) includes a plate portion (34) positioned below the headlight unit (13); and the attachment portion (32) extends forward from the plate portion (34).

5. The motorcycle (1) according to claim 4, further comprising a cover member (22) for covering the front cowl (21) from below; wherein the cover member (22) supports the attachment portion (32) and the plate portion (34) from below.

6. The motorcycle (1) according to claim 5, wherein the cover member (22) is divided into left and right portions below the plate portion (34), and the cover member (22) includes a first member (41) and a second member (42) formed separately from each other.

7. The motorcycle (1) according to claim 6, wherein the first member (41) and the second member (42) are fixed to a lower surface of the plate portion (34).

8. The motorcycle (1) according to claim 1, wherein the front cowl (21) includes a plate portion (34) positioned below the headlight unit (13); and the attachment portion (32) is integrated with a lower surface of the plate portion (34).

9. The motorcycle (1) according to claim 8, wherein the attachment portion (32) extends downward from the lower surface of the plate portion (34).

10. The motorcycle (1) according to claim 9, wherein the attachment portion (32) is integrated with a rear end portion of the lower surface of the plate portion (34).

11. The motorcycle (1) according to claim 1, wherein the front cowl (21) includes a support portion (34); and the attachment portion (32) includes a protruding portion (36) protruding from the support portion (34), and a fixing portion (37) integrated with the protruding portion (36), the fixing portion (37) to which the license plate (20) is fixed.

12. The motorcycle (1) according to claim 11, wherein a rib (38) is provided to the protruding portion (36).

13. The motorcycle (1) according to claim 11, wherein a rib (35a, 35b) is provided to the support portion (34).

14. The motorcycle (1) according to claim 1, wherein the attachment portion (32) extends from a position further rearward than a front end of the lens member (24).

## Patentansprüche

1. Motorrad (1), das umfasst:
eine Scheinwerfer-Einheit (13), die ein Sockel-Element (23), das aus Kunststoff besteht, und ein Linsen-Element (24) umfasst, das an dem Sockel-Element (23) angebracht ist;
eine vordere Verkleidung (21), die aus Kunststoff besteht und an der die Scheinwerfer-Einheit (13) angebracht ist; und
einen Anbringungsabschnitt (32), der zum Anbringen eines Nummernschildes (20) dient,
**dadurch gekennzeichnet, dass**
der Anbringungsabschnitt (32) von der vorderen Verkleidung (21) vorsteht, und
der Anbringungsabschnitt (32) aus Kunststoff besteht und integral mit der vorderen Verkleidung (21) geformt ist.

2. Motorrad (1) nach Anspruch 1, wobei die vordere Verkleidung (21) einen Plattenabschnitt (34) enthält, der unterhalb der Scheinwerfer-Einheit (13) positioniert ist, und der Anbringungsabschnitt (32) integral mit einer oberen Fläche des Plattenabschnitts (34) ausgebildet ist.

3. Motorrad (1) nach Anspruch 1 oder 2, wobei der Anbringungsabschnitt (32) weiter vorn angeordnet ist als ein unterer Endabschnitt der Scheinwerfer-Einheit (13).

4. Motorrad (1) nach Anspruch 1, wobei die vordere Verkleidung (21) einen Plattenabschnitt (34) enthält, der unterhalb der Scheinwerfer-Einheit (13) positioniert ist; und sich der Anbringungsabschnitt (32) von dem Plattenabschnitt (34) nach vorn erstreckt.

5. Motorrad (1) nach Anspruch 4, das des Weiteren ein Abdeckungselement (22) umfasst, mit dem die vordere Verkleidung (21) von unten abgedeckt wird, wobei das Abdeckungselement (22) den Anbringungsabschnitt (32) und den Plattenabschnitt (34) von unten trägt.

6. Motorrad (1) nach Anspruch 5, wobei das Abdeckungselement (22) in einen linken und einen rechten Abschnitt unterhalb des Plattenabschnitts (34) unterteilt ist und das Abdeckungselement (22) ein erstes Element (41) sowie ein zweites Element (42) enthält, die separat voneinander ausgebildet sind.

7. Motorrad (1) nach Anspruch 6, wobei das erste Element (41) und das zweite Element (42) an einer unteren Fläche des Plattenabschnitts (34) befestigt sind.

8. Motorrad (1) nach Anspruch 1, wobei die vordere Verkleidung (21) einen Plattenabschnitt (34) enthält, der unterhalb der Scheinwerfer-Einheit (13) positioniert ist, und der Anbringungsabschnitt (32) integral mit einer unteren Fläche des Plattenabschnitts (34) ausgebildet ist.

9. Motorrad (1) nach Anspruch 8, wobei sich der Anbringungsabschnitt (32) von der unteren Fläche des Plattenabschnitts (34) nach unten erstreckt.

10. Motorrad (1) nach Anspruch 9, wobei der Anbringungsabschnitt (32) integral mit einem hinteren Endabschnitt der unteren Fläche des Plattenabschnitts (34) ausgebildet ist.

11. Motorrad (1) nach Anspruch 1, wobei die vordere Verkleidung (21) einen Trageabschnitt (34) enthält und der Anbringungsabschnitt (32) einen vorstehenden Abschnitt (36), der von dem Trageabschnitt (34) vorsteht, sowie einen Befestigungsabschnitt (37) enthält, der integral mit dem vorstehenden Abschnitt (36) ausgebildet ist, und an dem Befestigungsabschnitt (37) das Nummernschild (20) befestigt wird.

12. Motorrad (1) nach Anspruch 11, wobei sich an dem vorstehenden Abschnitt (36) eine Rippe (38) befindet.

13. Motorrad (1) nach Anspruch 11, wobei sich an dem Trageabschnitt (34) eine Rippe (35a, 35b) befindet.

14. Motorrad (1) nach Anspruch 1, wobei sich der Anbringungsabschnitt (32) von einer Position aus erstreckt, die weiter hinten liegt als ein vorderes Ende des Linsen-Elementes (24).

## Revendications

1. Motocyclette (1) comprenant :
une unité de phare (13) incluant un élément de base (23) constitué de résine et un élément formant optique (24) fixé à l'élément de base (23),
un carénage avant (21), constitué de résine, auquel est fixée l'unité de phare (13), et
une partie de fixation (32) utilisée pour fixer une plaque minéralogique (20),
**caractérisée par** :
la partie de fixation (32) qui dépasse du carénage avant (21), et
la partie de fixation (32) qui est constituée de résine et qui est moulée en une seule pièce avec le carénage avant (21).

2. Motocyclette (1) selon la revendication 1, dans laquelle le carénage avant (21) inclut une partie de plaque (34) positionnée en dessous de l'unité de phare (13), et la partie de fixation (32) est intégrée à la surface supérieure de la partie de plaque (34).

3. Motocyclette (1) selon la revendication 1 ou la revendication 2, dans laquelle la partie de fixation (32) est placée plus en avant que la partie d'extrémité inférieure de l'unité de phare (13).

4. Motocyclette (1) selon la revendication 1, dans laquelle le carénage avant (21) inclut une partie de plaque (34) positionnée en dessous de l'unité de phare (13), et la partie de fixation (32) s'étend en avant de la partie de plaque (34).

5. Motocyclette (1) selon la revendication 4, comprenant en outre un élément formant carter (22) destiné à recouvrir le carénage avant (21) depuis le dessous, l'élément formant carter (22) supportant la partie de fixation (32) et la partie de plaque (34) depuis le dessous.

6. Motocyclette (1) selon la revendication 5, dans laquelle l'élément formant carter (22) est divisé en des parties gauche et droite en dessous de la partie de plaque (34), et l'élément formant carter (22) inclut un premier élément (41) et un second élément (42) formés séparément l'un de l'autre.

7. Motocyclette (1) selon la revendication 6, dans laquelle le premier élément (41) et le second élément (42) sont fixés à la surface inférieure de la partie de plaque (34).

8. Motocyclette (1) selon la revendication 1, dans laquelle le carénage avant (21) inclut une partie de plaque (34) positionnée en dessous de l'unité de phare (13), et la partie de fixation (32) est intégrée à la surface inférieure de la partie de plaque (34).

9. Motocyclette (1) selon la revendication 8, dans laquelle la partie de fixation (32) s'étend vers le bas à partir de la surface inférieure de la partie de plaque (34).

10. Motocyclette (1) selon la revendication 9, dans laquelle la partie de fixation (32) est intégrée à une partie d'extrémité arrière de la surface inférieure de la partie de plaque (34).

11. Motocyclette (1) selon la revendication 1, dans laquelle le carénage avant (21) inclut une partie de support (34), et la partie de fixation (32) inclut une partie en saillie (36) dépassant de la partie de support (34) et une partie de fixation (37) intégrée à la partie en saillie (36), la plaque minéralogique (30) étant fixée à la partie de fixation (37).

12. Motocyclette (1) selon la revendication 11, dans laquelle une nervure (38) est prévue sur la partie en saillie (36).

13. Motocyclette (1) selon la revendication 11, dans laquelle une nervure (35a, 35b) est prévue sur la partie de support (34).

14. Motocyclette (1) selon la revendication 1, dans laquelle la partie de fixation (32) s'étend depuis une position située plus en arrière que l'extrémité avant de l'élément formant optique (24).
